# EUROPEAN PATENT SPECIFICATION

(11) **EP 3 297 344 B1**
(45) Date of publication and mention of the grant of the patent: **09.09.2020**
(21) Application number: 15894591.5
(22) Date of filing: 09.06.2015
(51) Int. Cl.: H04W 64/00

(54) **POSITIONING METHOD AND APPARATUS, AND TERMINAL**
POSITIONIERUNGSVERFAHREN UND -VORRICHTUNG SOWIE ENDGERÄT
PROCÉDÉ ET APPAREIL DE POSITIONNEMENT, ET TERMINAL

(43) Date of publication of application: 21.03.2018
(73) Proprietor: Huawei Technologies Co., Ltd., Longgang Shenzhen, Guangdong 518129 (CN)
(72) Inventor: CHEN, Xiaochen, Shenzhen, Guangdong 518129 (CN); WANG, Tongbo, Shenzhen, Guangdong 518129 (CN)
(74) Representative: Maiwald Patent- und Rechtsanwaltsgesellschaft mbH
(86) International application number: PCT/CN2015/081057
(87) International publication number: WO 2016/197321

(56) References cited:
- WO-A1-2011/067466
- WO-A1-2014/024005
- CN-A- 103 530 323
- CN-A- 103 533 635
- CN-A- 103 906 235
- GB-A- 2 516 284
- US-A1- 2012 100 870
- US-A1- 2014 236 476

## Description

### TECHNICAL FIELD

The present invention relates to the field of mobile terminals, and in particular, to a positioning method and apparatus, and a terminal.

### BACKGROUND

Currently, in addition to a GPS positioning technology, network positioning is also a positioning method that is widely applied. In network positioning, a positioning result needs to be obtained from a server of a location service provider by using a network connection.

Current network positioning is mainly implemented as follows: When a user requests to obtain geographical location information of a mobile terminal, the mobile terminal obtains, from a network server according to a network identifier such as a cell identity (Cell ID) and/or a basic service set identifier (BSSID) of a Wi-Fi access point (AP), a terrestrial geographical location to which the network identifier is mapped. In this way, rough positioning is conveniently implemented.

However, in this positioning manner, every time the user initiates a positioning request, the mobile terminal needs to establish a data connection to the server of the location service provider, and perform data transmission. Therefore, a high requirement is imposed on the network connection. When network signal quality is poor, a positioning speed is reduced obviously.

US 2012/100 870 A1 discloses a method for positioning a terminal using signals from a plurality of access points of at least one wireless telecommunications network. Geographical position information for access points within radio range is looked up in a database, which is stored locally on the terminal or may be downloaded to it.

GB 2 516 284 A discloses a method for classifying access points in a radio map, with the goal of eliminating access points that are less relevant for determining the position of terminals from the radio map and to thus reduce the size of the radio map.

US 2014/236 476 A1 discloses further systems and methods for determining the location of a mobile device. Measured signal characteristics of access points within radio range are compared with expected signal characteristics obtained from a radio map.

WO 2011/067 466 A1 discloses further systems and methods for determining the location of a mobile device based on a radio map of access points within radio range. Fingerprints of the radio environment are lossily compressed by removing less relevant access points.

### SUMMARY

The present invention is defined by the appended claims. Embodiments of the present invention provide a positioning method and apparatus, and a terminal, to increase a terminal positioning speed.

According to a first aspect, a positioning method is provided and includes:
obtaining, by a terminal device, a cell identity obtained by the terminal from a base station at a current time, or a network identifier such as a basic service set identifier of a wireless network access point that is obtained by the terminal at a current time, as a target network identifier;
querying, by the terminal device, according to the target network identifier, whether positioning information about a region to which the target network identifier belongs is stored locally on the terminal device, and if the positioning information about the region is not stored, downloading the positioning information about the region from a server to a local end, where the positioning information about the region is geographical location information corresponding to each of multiple network identifiers that the region has, and the multiple network identifiers are used to represent multiple network devices in the region; and
when a positioning request is received by the terminal device, obtaining, by the terminal device, from the locally stored positioning information about the region, geographical location information corresponding to the target network identifier.

The querying, according to the target network identifier, whether positioning information about a region to which the target network identifier belongs is stored locally, includes:
requesting to obtain, by the terminal device, from the server, the region to which the target network identifier belongs, and then querying, according to the region returned by the server, whether the positioning information about the region is stored locally, where when the query result is yes, it indicates that the positioning information about the region is stored locally, whereas when the query result is no, it indicates that the positioning information about the region is not stored locally.

With reference to the first aspect, in a first possible implementation, the querying whether the positioning information about the region is stored locally includes: querying whether the positioning information is stored in a local first storage area; if the positioning information is not stored in the local first storage area, querying whether the positioning information is stored in a local second storage area; and if the positioning information is stored in the local second storage area, loading the positioning information stored in the local second storage area into the local first storage area, or if the positioning information is not stored in the local second storage area, performing the step of downloading the positioning information about the region from a server to a local end; and
the obtaining, from the locally stored positioning information about the region, geographical location information corresponding to the target network identifier includes: if the positioning information is stored in the local first storage area, obtaining, from the local first storage area, the geographical location information corresponding to the target network identifier, or if the positioning information is not stored in the local first storage area, obtaining, from the local second storage area, the geographical location information corresponding to the target network identifier.

With reference to the first possible implementation of the first aspect, the downloading the positioning information about the region from a server to a local end includes: downloading the positioning information from the server to the local second storage area; or downloading the positioning information from the server to the local first storage area.

With reference to the first possible implementation of the first aspect, or the second possible implementation of the first aspect, in a third possible implementation, when loading the positioning information stored in the local second storage area into the local first storage area, the method further includes: determining whether positioning information about a previously visited region is stored in the local first storage area, and if the positioning information about the previously visited region is stored, removing the positioning information about the historical region from the local first storage area.

With reference to the first aspect, or with reference to any one of the foregoing possible implementations of the first aspect, in a fourth possible implementation, after the querying whether positioning information about a region to which the target network identifier belongs is stored locally, the method further includes:
if the positioning information is stored locally, but the geographical location information corresponding to the target network identifier is missing in the positioning information, downloading, from the server, the geographical location information corresponding to the target network identifier, and loading the downloaded geographical location information corresponding to the target network identifier into the positioning information.

With reference to the first aspect, in a fifth possible implementation, the method further includes: detecting that a GPS is enabled; receiving geographical location information positioned by the GPS; and updating the geographical location information corresponding to the target network identifier in the locally stored positioning information to the geographical location information positioned by the GPS.

According to a second aspect, a positioning apparatus for a terminal is provided and includes:
an obtaining unit, configured to obtain a cell identity obtained by the terminal from a base station at a current time, or a network identifier such as a basic service set identifier of a wireless network access point that is obtained by the terminal at a current time, as a target network identifier;
a querying unit, configured to query, according to the target network identifier, whether positioning information about a region to which the target network identifier belongs is stored locally, where the positioning information about the region is geographical location information corresponding to each of multiple network identifiers that the region has, and the multiple network identifiers are used to represent multiple network devices in the region;
a first downloading unit, configured to download the positioning information about the region from a server to a local end when a query result output by the querying unit is no; and
a positioning unit, configured to obtain, from the locally stored positioning information about the region, geographical location information corresponding to the target network identifier when a positioning request is received.

The querying unit is specifically configured to: or request to obtain, from the server, the region to which the target network identifier belongs, and then query, according to the region returned by the server, whether the positioning information about the region is stored locally, where when the query result is yes, it indicates that the positioning information about the region is stored locally, whereas when the query result is no, it indicates that the positioning information about the region is not stored locally.

With reference to the second aspect, in a first possible implementation, the querying unit includes a first querying subunit, a second querying subunit, a first loading unit, and a download triggering unit, where
the first querying subunit is configured to query whether the positioning information is stored in a local first storage area;
the second querying subunit is configured to query, when a query result of the first querying subunit is no, whether the positioning information is stored in a local second storage area;
the first loading unit is configured to load, when a query result of the second querying subunit is yes, the positioning information stored in the local second storage area into the local first storage area;
the download triggering unit is configured to trigger the first downloading unit to download the positioning information about the region from the server to the local end when a query result of the second querying subunit is no; and
the positioning unit is specifically configured to: if the positioning information is stored in the local first storage area, obtain, from the local first storage area, the geographical location information corresponding to the target network identifier, or if the positioning information is not stored in the local first storage area, obtain, from the local second storage area, the geographical location information corresponding to the target network identifier.

With reference to the first possible implementation of the second aspect, in a second possible implementation, the first downloading unit is specifically configured to: download the positioning information from the server to the local second storage area; or download the positioning information from the server to the local first storage area.

With reference to the first possible implementation of the second aspect, or with reference to the second possible implementation of the second aspect, in a third possible implementation, the apparatus further includes a determining unit and a removing unit, where
the determining unit is configured to determine, when the first loading unit loads the positioning information stored in the local second storage area into the local first storage area, whether positioning information about a historical region is stored in the local first storage area; and
the removing unit is configured to remove the positioning information about the historical region from the local first storage area when a result output by the determining unit is yes.

With reference to any one of the second aspect, or the foregoing possible implementations of the second aspect, in a fourth possible implementation, the apparatus further includes a second downloading unit and a second loading unit, where
the second downloading unit is configured to: after the querying unit queries whether the positioning information about the region to which the target network identifier belongs is stored locally, if the positioning information is stored locally, but the geographical location information corresponding to the target network identifier is missing in the positioning information, download, from the server, the geographical location information corresponding to the target network identifier; and
the second loading unit is configured to load the geographical location information corresponding to the target network identifier and downloaded by the second downloading unit, into the positioning information.

With reference to the second aspect, in a fifth possible implementation, the apparatus further includes a detection unit, a receiving unit, and an updating unit, where
the detection unit is configured to detect that a GPS is enabled;
the receiving unit is configured to receive geographical location information positioned by the GPS; and
the updating unit is configured to update the geographical location information corresponding to the target network identifier in the locally stored positioning information to the geographical location information positioned by the GPS.

According to a third aspect, a terminal is provided and includes an input apparatus, an output apparatus, a memory, and a processor coupled with the memory, where
the processor reads an instruction stored in the memory, so that the processor is configured to perform a positioning method according to the first aspect.

In implementations of the embodiments of the present invention, a terminal queries, according to a target network identifier, whether positioning information about a region to which the target network identifier belongs is stored locally, and if the positioning information about the region is not stored, downloads the positioning information about the region from a server to a local end; and when a positioning request is received, the terminal obtains, from the locally stored positioning information about the region, geographical location information corresponding to the target network identifier. The geographical location information of the terminal can be directly obtained from the local end according to the target network identifier. Therefore, dependency of terminal positioning on a network is reduced, interactions between the terminal and the server are reduced, and a positioning speed is increased effectively.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention.
FIG. 1 is a schematic diagram of a network positioning system used in an embodiment of the present invention;
FIG. 2 is a flowchart of a first embodiment of a positioning method according to an embodiment of the present invention;
FIG. 3 is a flowchart of a first embodiment of a positioning method according to an embodiment of the present invention;
FIG. 4 is a schematic structural diagram of a first embodiment of a positioning apparatus according to an embodiment of the present invention;
FIG. 5 is a schematic structural diagram of a second embodiment of a positioning apparatus according to an embodiment of the present invention;
FIG. 6 is a schematic structural diagram of a third embodiment of a positioning apparatus according to an embodiment of the present invention; and
FIG. 7 is a schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

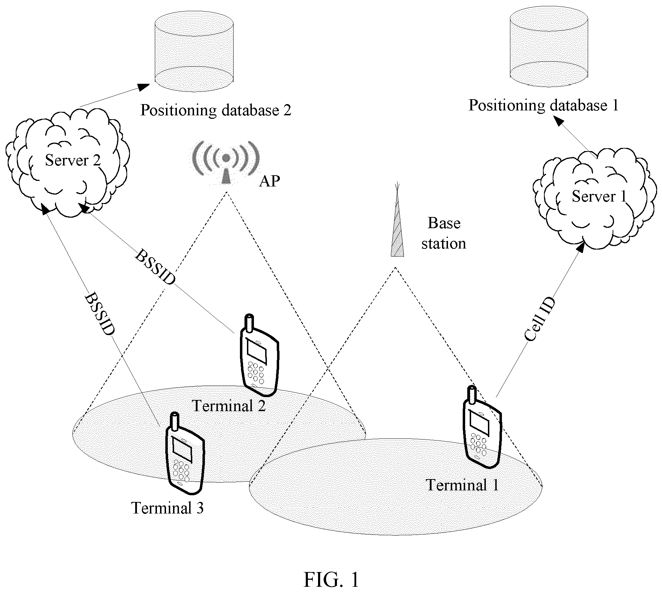

FIG. 1 is a schematic diagram of a network positioning system used in an embodiment of the present invention. Two positioning manners are reflected: cell ID (cell identity) positioning and Wi-Fi positioning.

A positioning principle of the cell ID positioning is: a network positions a terminal according to a cell in which the terminal is located and a location of a base station of the cell. Specifically, as shown in FIG. 1, the base station sends, to a terminal 1 in a cell controlled by the base station, a cell ID of the cell; the terminal 1 initiates a positioning request to a server 1 by using a network connection, where the positioning request includes the cell ID of the cell; the server 1 finds geographical coordinates of the cell from a positioning database 1 according to the cell ID in the positioning request, and further estimates a geographical location of the terminal 1 roughly. The estimated geographical location of the terminal 1 may be a geographical location of the base station in the cell, or may be another geographical location in the cell.

Similar to the cell ID positioning, a positioning principle of the Wi-Fi positioning is: the network positions a terminal according to an access point to which the terminal is connected and a location of the access point. Specifically, as shown in FIG. 1, a Wi-Fi access point (AP) sends a BSSID (a MAC address of the AP) to a terminal 2 connected to the Wi-Fi access point; the terminal 2 initiates a positioning request to a server 2 by using a network connection, where the positioning request includes the BSSID of the AP; the server 2 finds geographical coordinates of the AP from a positioning database 2 according to the BSSID in the positioning request, and further estimates a geographical location of the terminal roughly. The estimated geographical location of the terminal 2 may be a geographical location of the AP to which the terminal 2 is connected, or may be another geographical location within coverage of the AP.

The positioning database 1 may include geographical location information of a base station provided by a location service provider. The positioning database 2 may include geographical location information of an access point device provided by the location service provider. Geographical location information of a network device may include longitudinal and latitudinal coordinates, positioning precision information, and the like of the network device.

In an existing network positioning system, every time a terminal initiates a positioning request, the terminal needs to establish a network connection to a location server to obtain a positioning result from the location server. This positioning manner imposes a high requirement on the network connection. When network signal quality is poor, a positioning speed is reduced obviously.

In a technical solution provided by an embodiment of the present invention, a terminal downloads, in a background when a network connection exists, positioning information about a region to which a target network identifier belongs, to the terminal. When a user initiates a positioning request, the terminal can directly obtain, from the locally stored positioning information about the region, geographical location information corresponding to the target network identifier. Therefore, dependency of terminal positioning on a network is reduced, interactions between the terminal and a server are reduced, and a positioning speed may be increased effectively.

The region to which the target network identifier belongs is a region to which a network device (such as a base station or an access point) represented by the target network identifier belongs. For example, a region to which a cell ID of a base station A (installed in a city B) belongs is a region to which the base station A belongs, namely, the city B. The positioning information about the region is geographical location information corresponding to each of multiple network identifiers that the region has, and the multiple network identifiers are used to represent multiple network devices in the region. That is, the positioning information about the region includes geographical location information of the multiple network devices in the region. For example, if the city B is a region to which the base station A, a base station B, and a base station C belong, positioning information about the city B may include: geographical location information of the three base stations A, B, and C.

Embodiments of the present invention disclose a positioning method and apparatus, and a terminal, to increase a positioning speed effectively. The embodiments are hereinafter described in detail separately.

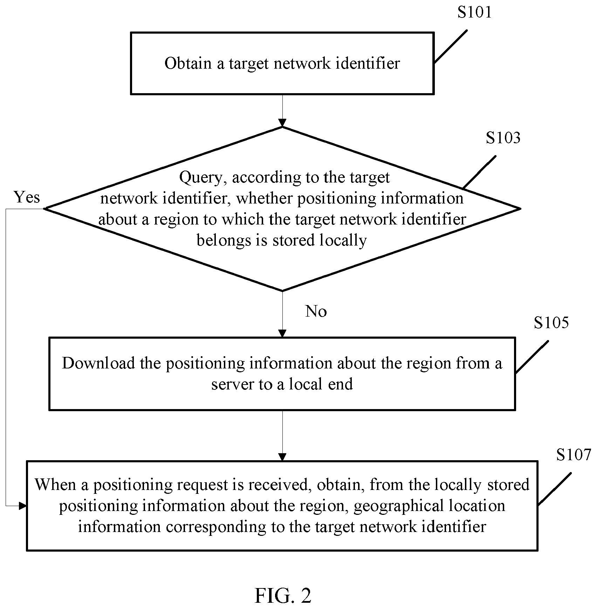

FIG. 2 is a flowchart of a first embodiment of a positioning method according to an embodiment of the present invention. Referring to FIG. 2, the method includes the following steps.

S101. Obtain a target network identifier.

Specifically, the target network identifier may be a cell identity obtained by a terminal from a base station at a current time, or a network identifier such as a basic service set identifier of a wireless network access point that is obtained by a terminal at a current time.

It should be noted that, the target network identifier may also be a combination of the foregoing two network identifiers, and higher-precision positioning may be implemented. In a specific implementation, the terminal may compare geographical location information corresponding to the foregoing two network identifiers, and determine geographical location information corresponding to a network identifier with higher positioning precision as geographical location information of the terminal. The terminal may also determine an intersection part indicated by the geographical location information corresponding to the foregoing two network identifiers as geographical location information of the terminal.

S103. Query, according to the target network identifier, whether positioning information about a region to which the target network identifier belongs is stored locally.

The region to which the target network identifier belongs, used in this embodiment of the present invention, is a region to which a network device (such as a base station or an access point) represented by the target network identifier belongs.

It may be understood that, in a small range, the terminal is currently located within coverage of signals of the network device represented by the target network identifier, for example, a cell A; and in a large range, the terminal is currently also located in the region to which the target network identifier belongs, for example, a city B.

The positioning information about the region, used in this embodiment of the present invention, includes geographical location information corresponding to each of multiple network identifiers that the region has, and the multiple network identifiers are used to represent multiple network devices in the region. That is, the positioning information about the region includes geographical location information of the multiple network devices in the region.

It should be noted that, the region used in this embodiment may be a geographical region such as a city or a county, or may be a geographical region limited by longitudinal and latitudinal numeric values. The region used in this embodiment may also be a region in a communication sense. For example, the region is a cell cluster formed by multiple neighboring cells.

Specifically, when a query result obtained by performing S103 is yes, step S107 may be performed. That is, when the terminal locally stores the positioning information about the region in which the terminal is currently located, the terminal may wait for receiving a positioning request. When a query result obtained by performing S103 is no, step S105 may be performed. That is, when the terminal locally does not store the positioning information about the region in which the terminal is currently located, the terminal may download the positioning information to a local end.

S105. Download the positioning information about the region from a server to a local end.

S107. When a positioning request is received, obtain, from the locally stored positioning information about the region, geographical location information corresponding to the target network identifier.

It may be understood that, the terminal is currently located within the coverage of the signals of the network device represented by the target network identifier. Therefore, the geographical location information corresponding to the target network identifier may roughly indicate a current geographical location of the terminal.

It should be noted that, in this embodiment of the present invention, S107 is not limited to being performed after S105, but may be triggered at any time by the positioning request initiated by the user.

Optionally, the terminal may perform S101 to S105 after power-on, or may perform S101 to S105 after the terminal accesses a network, or may perform S101 to S105 at regular intervals.

Preferably, the terminal may always perform S101 to S105 in a background, or the terminal may perform S101 to S105 immediately when the location of the terminal changes. In this way, the terminal may always locally store the positioning information about the region to which the target network identifier belongs.

Specifically, the positioning information locally stored by the terminal may be shown in Table 1:

**Table 1**

| **Cell identity** | **Geographical location information** | | |
|---|---|---|---|
| | **Longitude** | **Latitude** | **Precision** |
| Cell ID 1 | 100°15'30"E | 28°35'10"N | 100 meters |
| Cell ID 2 | 100°15'11"E | 28°35'20"N | 150 meters |
| Cell ID 3 | 100°15'8"E | 28°35'30"N | 200 meters |

In this embodiment of the present invention, the terminal may query, in at least the following two implementations, whether the terminal locally stores the positioning information about the region to which the target network identifier belongs. Manner 1: The terminal may query whether the geographical location information corresponding to the target network identifier is stored locally, where when the query result is yes, it indicates that the positioning information is stored locally, or when the query result is no, it indicates that the positioning information is not stored locally.

For example, the terminal locally stores positioning information about a city A as shown in Table 1. If the target network identifier obtained by the terminal is the cell ID 1, geographical location information corresponding to the cell ID 1 may be found on the terminal locally, and it may be determined that the positioning information about the city A (a region to which the cell ID 1 belongs) is stored on the terminal locally.

Manner 2: The terminal may request to obtain, from the server, the region to which the target network identifier belongs, and then query, according to the region returned by the server, whether the positioning information about the region is stored locally, where when the query result is yes, it indicates that the positioning information about the region is stored locally, or when the query result is no, it indicates that the positioning information about the region is not stored locally.

For example, if the target network identifier obtained by the terminal is the cell ID 1, a region to which the cell ID 1 returned by the server belongs is the city A. In this case, the terminal may directly find the positioning information about the city A on the terminal locally, that is, it may be determined that the positioning information about the region to which the cell ID 1 belongs is stored on the terminal locally.

Particularly, when the terminal is connected to a network device added in the city A (geographical location information about the added network device is not stored on the terminal locally), the terminal may learn, from the server in the foregoing manner 2, that a region to which the added device belongs is the city A, and the terminal may query whether the positioning information about the city A is stored on the terminal locally.

In this embodiment of the present invention, if the terminal locally stores the positioning information (such as the positioning information about the city A), but does not store the geographical location information corresponding to the target network identifier (such as the geographical location information about the added network device), the terminal may download, from the server, the geographical location information corresponding to the target network identifier (the geographical location information about the added network device), and load the geographical location information corresponding to the target network identifier (the geographical location information about the added network device) into the positioning information (the positioning information about the city A). In this way, the geographical location information about the added network device in the region in which the terminal is currently located can be loaded into the positioning information locally stored by the terminal, and the positioning information locally stored by the terminal can be further improved.

It should be noted that, the positioning information shown in Table 1 is only an implementation of this embodiment of the present invention. In actual use, the positioning information locally stored by the terminal may further include other positioning information, for example, a BSSID of a Wi-Fi access point and geographical location information corresponding to the BSSID.

It should be noted that, the target network identifier used in this embodiment of the present invention may also be a historical network identifier (rather than the network identifier obtained at the current time) obtained by the terminal, and a historical location of the terminal may be traced back according to geographical location information corresponding to the historical network identifier.

It should be noted that, the target network identifier used in this embodiment of the present invention may also be an external network identifier (a network identifier transmitted by an external device and received by the terminal) obtained by the terminal. For example, the terminal receives an external network identifier sent by a wearable device. The terminal may obtain geographical location information about the wearable device according to the external network identifier, and may trace a carrier of the wearable device.

Optionally, in this embodiment of the present invention, when the terminal detects that a GPS on the terminal is enabled, the terminal may further receive geographical location information positioned by the GPS, and update the geographical location information corresponding to the target network identifier in the locally stored positioning information to the geographical location information positioned by the GPS. Due to a feature of precise GPS positioning, this may further improve precision of the positioning information locally stored.

For example, geographical location information positioned by the GPS at the current time is (100°15'8"E, 28°35'30"N), and the target network identifier at the current time is the cell ID 1 in Table 1. In this case, the terminal may update the longitude and latitude of the cell ID 1 in the positioning information shown in Table 1 to (100°15'8"E, 28°35'30"N).

In an implementation of this embodiment of the present invention, a terminal queries, according to the target network identifier, whether positioning information about a region to which the target network identifier belongs is stored locally, and if the positioning information about the region is not stored, downloads the positioning information about the region from a server to a local end; and when a positioning request is received, the terminal obtains, from the locally stored positioning information about the region, geographical location information corresponding to the target network identifier. The geographical location information of the terminal can be directly obtained from the local end according to the target network identifier. Therefore, dependency of terminal positioning on a network is reduced, interactions between the terminal and the server are reduced, and a positioning speed is increased effectively.

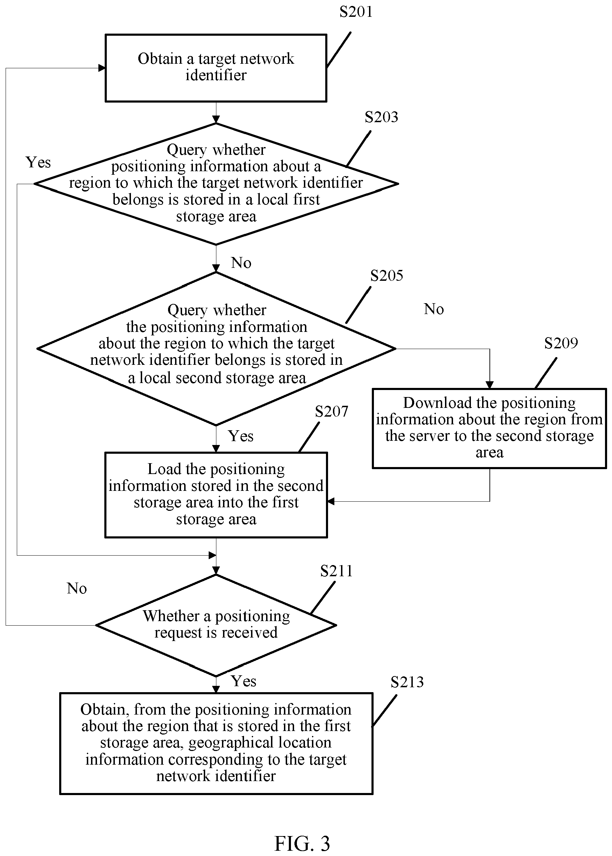

FIG. 3 is a flowchart of a first embodiment of a positioning method according to an embodiment of the present invention. According to the embodiment corresponding to FIG. 3, positioning information locally stored by a terminal is stored in a first storage area and a second storage area respectively. Positioning information about a region in which the terminal is currently located (a region to which the target network identifier belongs) is stored in the first storage area, and positioning information about a historical region is stored in the second storage area. In this way, the terminal may directly find information about a current geographical location of the terminal from the first storage area (geographical location information corresponding to the target network identifier), a query time may be reduced, and a positioning speed is further increased. The method shown in FIG. 3 is an improvement on the method shown in FIG. 2. For content that is not mentioned in the embodiment corresponding to FIG. 3, refer to descriptions about the embodiment corresponding to FIG. 2. Referring to FIG. 3, the method includes the following steps.

S201. Obtain a target network identifier.

Specifically, the target network identifier may be a cell identity obtained by a terminal from a base station at a current time, or a network identifier such as a basic service set identifier of a wireless network access point that is obtained by a terminal at a current time.

S203. Query whether positioning information about a region to which the target network identifier belongs is stored in a local first storage area.

Specifically, when a query result obtained by performing S203 is no, the terminal may perform step S205. That is, if the positioning information about the region in which the terminal is currently located (the region to which the target network identifier belongs) is not stored in the first storage area, the terminal may query whether the positioning information about the region in which the terminal is currently located is stored in a local second storage area. When a query result obtained by performing S203 is yes, the terminal may perform step S211. That is, if the positioning information about the region in which the terminal is currently located is not stored in the first storage area, the terminal may wait for receiving a positioning request.

S205. Query whether the positioning information about the region to which the target network identifier belongs is stored in a local second storage area.

The second storage area in this embodiment of the present invention may be used to back up positioning information about a historical region in which the terminal is located. For example, cities visited by the terminal include cities A, B, and C. In this case, positioning information about the three cities A, B, and C is stored in the second storage area.

Specifically, when a query result obtained by performing S205 is no, step S209 may be performed. That is, if the positioning information about the region in which the terminal is currently located (the region to which the target network identifier belongs) is not stored in the local second storage area, the terminal may download the positioning information from a server. When a query result obtained by performing S205 is yes, step S207 may be performed. That is, if the positioning information is stored in the local second storage area, the terminal may load the positioning information into the first storage area.

S207. Load the positioning information stored in the second storage area into the first storage area.

That is, if the positioning information about the region in which the terminal is currently located (the region to which the target network identifier belongs) is not stored in the local first storage area, but the positioning information about the region in which the terminal is currently located is stored in the local second storage area, the terminal may perform S207.

S209. Download the positioning information about the region from the server to the second storage area.

Specifically, if the positioning information about the region is not stored locally (the first storage area and the second storage area), the terminal may download the positioning information about the region to the second storage area, and trigger execution of step S207, so that the positioning information about the region is stored in the first storage area.

S211. Whether a positioning request is received.

In a specific implementation, the terminal may wait, in a polling (Polling) manner, for receiving the positioning request, or may receive the positioning request by monitoring a preset positioning request event.

Specifically, when the terminal receives the positioning request by performing S211, the terminal may perform S213; or when the terminal does not receive the positioning request by performing S211, the terminal may perform S201. In an actual application, the terminal may perform S211 repeatedly, and this is not limited herein.

S213. Obtain, from the positioning information about the region that is stored in the first storage area, geographical location information corresponding to the target network identifier.

It may be understood that, the terminal is currently located within coverage of signals of a network device represented by the target network identifier. Therefore, the geographical location information corresponding to the target network identifier may roughly indicate a current geographical location of the terminal.

Optionally, the terminal may perform S201 to S209 after power-on, or may perform S201 to S209 after the terminal accesses a network, or may perform S201 to S209 at regular intervals.

Preferably, the terminal may always perform S201 to S209 in a background, or the terminal may perform S201 to S209 immediately when the location of the terminal changes. In this way, the terminal may always locally store the positioning information about the region to which the target network identifier belongs.

In this embodiment of the present invention, when performing S207, the terminal may further determine whether positioning information about a historical region in which the terminal is located is stored in the first storage area, and if the positioning information about the historical region is stored, remove the positioning information about the historical region from the first storage area. In this way, it may be ensured that only the positioning information about the region to which the target network identifier belongs is stored in the first storage area. This may reduce a query time and further increase a positioning speed.

It should be noted that, if the positioning information about the region is not stored on the terminal locally (the first storage area and the second storage area), when performing S209, the terminal may also not back up the positioning information about the region that is downloaded from the server, to the second storage area, but directly store the positioning information about the region in the first storage area.

Optionally, in this embodiment of the present invention, the first storage area and the second storage area may be locally stored files and may be stored in a portable manner, so that the positioning information stored in the first storage area and the second storage area may be shared and backed up between terminals. For example, a local first storage area and a local second storage area of the terminal 1 may be copied to a terminal 2, so that the terminal 2 may directly have the local positioning information of the terminal 1 without obtaining or downloading the information from the server.

In an implementation of this embodiment of the present invention, positioning information locally stored by a terminal is stored in a first storage area and a second storage area respectively. Positioning information about a region to which the target network identifier belongs is stored in the first storage area, and the terminal queries, from the first storage area, geographical location information corresponding to the target network. This may reduce a local query time for the terminal and increase a positioning speed effectively.

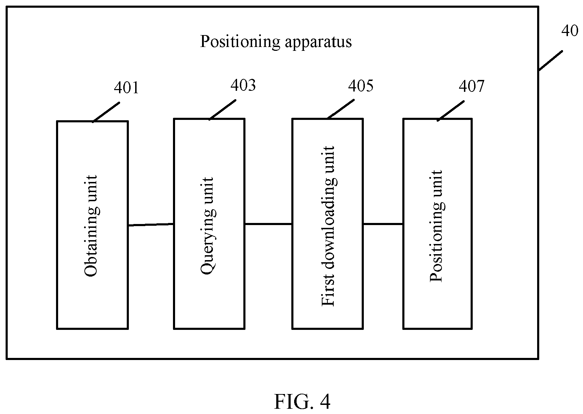

FIG. 4 is a schematic structural diagram of a first embodiment of a positioning apparatus according to an embodiment of the present invention. The positioning apparatus 40 shown in FIG. 4 may include an obtaining unit 401, a querying unit 403, a first downloading unit 405, and a positioning unit 407. The positioning apparatus 40 may be used to perform the methods in the embodiments in FIG. 2 and FIG. 3. For content that is not mentioned in the embodiment shown in FIG. 4, refer to descriptions about the embodiments corresponding to FIG. 2 and FIG. 3 respectively.

The obtaining unit 401 is configured to obtain a target network identifier.

The querying unit 403 is configured to query, according to the target network identifier, whether positioning information about a region to which the target network identifier belongs is stored locally, where the positioning information about the region is geographical location information corresponding to each of multiple network identifiers that the region has, and the multiple network identifiers are used to represent multiple network devices in the region.

The first downloading unit 405 is configured to download the positioning information about the region from a server to a local end when a query result output by the querying unit 403 is no, where the positioning information includes the network identifiers and geographical location information corresponding to the network identifiers.

The positioning unit 407 is configured to obtain, from the locally stored positioning information about the region, geographical location information corresponding to the target network identifier when a positioning request is received.

In this embodiment of the present invention, the querying unit 403 may query, in at least the following two implementations, whether the terminal locally stores the positioning information about the region to which the target network identifier belongs.
Manner 1: The querying unit 403 may query whether the geographical location information corresponding to the target network identifier is stored locally, where when the query result is yes, it indicates that the positioning information is stored locally, or when the query result is no, it indicates that the positioning information is not stored locally.
Manner 2: The querying unit 403 may request to obtain, from the server, the region to which the target network identifier belongs, and then query, according to the region returned by the server, whether the positioning information about the region is stored locally, where when the query result is yes, it indicates that the positioning information about the region is stored locally, or when the query result is no, it indicates that the positioning information about the region is not stored locally.

In an implementation of the present invention, the positioning information locally stored by the terminal may be stored in a first storage area and a second storage area respectively. The positioning information about the region in which the terminal is currently located (the region to which the target network identifier belongs) is stored in the first storage area, and positioning information about a historical region is stored in the second storage area. In this way, the terminal may directly find information about a current geographical location of the terminal from the first storage area (the geographical location information corresponding to the target network identifier), and a query time may be reduced.

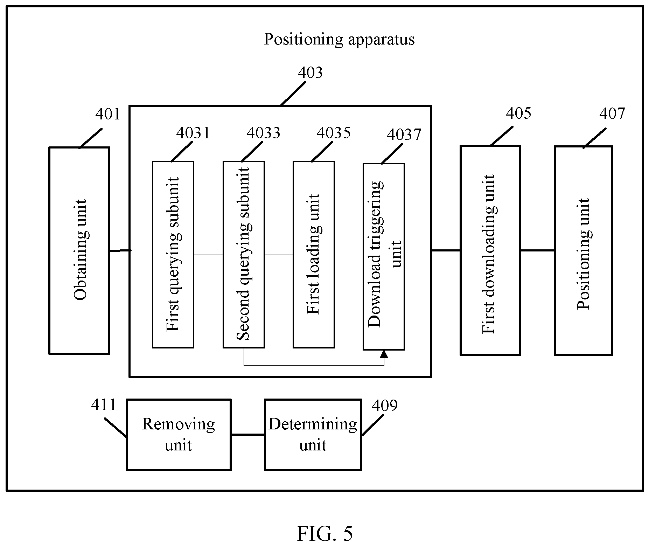

Further, when the querying unit 403 queries, in the manner 2, whether the positioning information is locally stored by the terminal, the querying unit 403 may include a first querying subunit 4031, a second querying subunit 4033, a first loading unit 4035, and a download triggering unit 4037, as shown in FIG. 5.

The first querying subunit 4031 is configured to query whether the positioning information is stored in a local first storage area.

The second querying subunit 4033 is configured to query, when a query result of the first querying subunit 4031 is no, whether the positioning information is stored in a local second storage area.

The first loading unit 4035 is configured to load, when a query result of the second querying subunit 4033 is yes, the positioning information stored in the second storage area into the first storage area.

The download triggering unit 4037 is configured to trigger the first downloading unit to download the positioning information about the region from the server to the local end when a query result of the second querying subunit 4033 is no.

In a specific implementation, if the positioning information is stored in the first storage area, the positioning unit 407 may obtain, from the first storage area, the geographical location information corresponding to the target network identifier. If the positioning information is not stored in the first storage area, the positioning unit 407 may obtain, from the second storage area, the geographical location information corresponding to the target network identifier.

In a specific implementation, the first downloading unit 405 may be specifically configured to: download the positioning information from the server to the second storage area; or download the positioning information from the server to the first storage area.

Still further, as shown in FIG. 5, the positioning apparatus 40 may further include a first determining unit 409 and a removing unit 411 in addition to the obtaining unit 401, the querying unit 403, the first downloading unit 405, and the positioning unit 407.

The determining unit 409 is configured to determine, when the first loading unit 4035 loads the positioning information stored in the second storage area into the first storage area, whether positioning information about a historical region is stored in the first storage area.

The removing unit 411 is configured to remove the positioning information about the historical region from the first storage area when a result output by the determining unit 409 is yes.

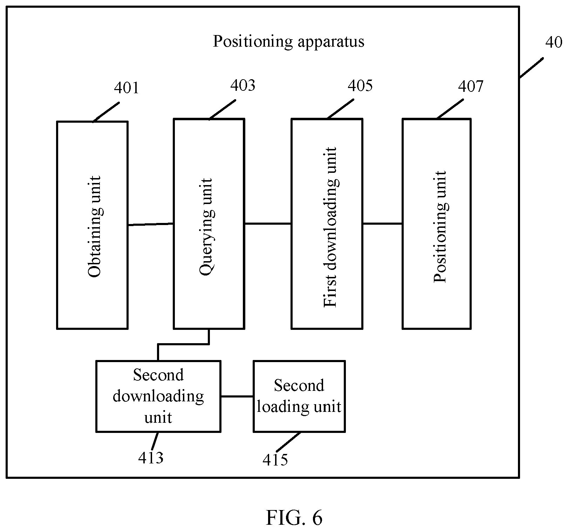

Still further, as shown in FIG. 6, the positioning apparatus 40 may further include a second downloading unit 413 and a second loading unit 415 in addition to the obtaining unit 401, the querying unit 403, the first downloading unit 405, and the positioning unit 407.

The second downloading unit 413 is configured to: after the querying unit 403 queries whether the positioning information about the region to which the target network identifier belongs is stored locally, if the positioning information is stored locally, but the geographical location information corresponding to the target network identifier is not stored, download, from the server, the geographical location information corresponding to the target network identifier.

The second loading unit 415 is configured to load the geographical location information corresponding to the target network identifier and downloaded by the second downloading unit, into the positioning information.

Still further, in this embodiment of the present invention, the positioning apparatus 40 may further include a detection unit, a receiving unit, and an updating unit in addition to the obtaining unit 401, the querying unit 403, the first downloading unit 405, and the positioning unit 407.

The detection unit is configured to detect that a GPS is enabled.

The receiving unit is configured to receive geographical location information positioned by the GPS.

The updating unit is configured to update the geographical location information corresponding to the target network identifier in the locally stored positioning information to the geographical location information positioned by the GPS.

It may be understood that, functions of the functional modules in the positioning apparatus 40 may be specifically implemented according to the method in the foregoing method embodiment. Details are not further described herein.

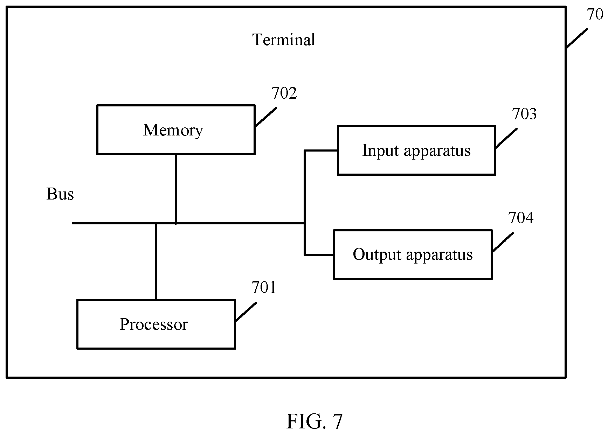

To better implement the foregoing solutions in the embodiments of the present invention, the present invention further provides a terminal used in cooperation for implementing the foregoing solutions. With reference to a schematic structural diagram of a terminal 70 provided by the present invention as shown in FIG. 7, the following describes the terminal in detail.

The terminal 70 includes an input apparatus 703, an output apparatus 704, a memory 702, and a processor 701 coupled with the memory 702 (a quantity of processors 701 in the terminal 70 may be one or more, and one processor is used as an example in FIG. 7). In some embodiments of the present invention, the input apparatus 703, the output apparatus 704, the memory 702, and the processor 701 may be connected by a bus or in other manners, and the connection by a bus is used as an example in FIG. 7.

The memory 702 is configured to store program code. The processor 701 is configured to invoke the program code stored in the memory 702, so that the processor is configured to perform the following steps:
obtaining a target network identifier;
querying, according to the target network identifier, whether positioning information about a region to which the target network identifier belongs is stored locally, and if the positioning information about the region is not stored, downloading the positioning information about the region from a server to a local end, where
the positioning information about the region is geographical location information corresponding to each of multiple network identifiers that the region has, and the multiple network identifiers are used to represent multiple network devices in the region; and
when a positioning request is received, obtaining, from the locally stored positioning information about the region, geographical location information corresponding to the target network identifier.

In this embodiment of the present invention, the processor 701 may query, in at least the following two implementations, whether the terminal locally stores the positioning information about the region to which the target network identifier belongs.
Manner 1: The processor 701 may query whether the geographical location information corresponding to the target network identifier is stored locally, where when the query result is yes, it indicates that the positioning information is stored locally, or when the query result is no, it indicates that the positioning information is not stored locally.
Manner 2: The processor 701 may request to obtain, from the server, the region to which the target network identifier belongs, and then query, according to the region returned by the server, whether the positioning information about the region is stored locally, where when the query result is yes, it indicates that the positioning information about the region is stored locally, or when the query result is no, it indicates that the positioning information about the region is not stored locally.

In this embodiment of the present invention, the positioning information locally stored by the terminal may be stored in a first storage area and a second storage area respectively. The positioning information about the region in which the terminal is currently located (the region to which the target network identifier belongs) is stored in the first storage area, and positioning information about a historical region is stored in the second storage area. In this way, the processor 701 may directly find information about a current geographical location of the terminal from the first storage area (the geographical location information corresponding to the target network identifier), and a query time may be reduced.

Further, when the processor 701 queries, in the foregoing manner 2, whether the positioning information is locally stored by the terminal, the processor 701 may first query whether the positioning information is stored in a local first storage area, and if the positioning information is not stored in the first storage area, then query whether the positioning information is stored in a local second storage area. If the positioning information is stored in the second storage area, the processor 701 may load the positioning information stored in the second storage area into the first storage area. If the positioning information is not stored in the second storage area, the processor 701 may download the positioning information about the region from the server to the local end.

In a specific implementation, the processor 701 may download the positioning information from the server to the second storage area; or download the positioning information from the server to the first storage area.

When the processor 701 obtains, from the locally stored positioning information about the region, the geographical location information corresponding to the target network identifier, if the positioning information is stored in the first storage area, the processor 701 may obtain, from the first storage area, the geographical location information corresponding to the target network identifier, or if the positioning information is not stored in the first storage area, the processor 701 may obtain, from the second storage area, the geographical location information corresponding to the target network identifier.

When the processor 701 loads the positioning information stored in the second storage area into the first storage area, the processor 701 may determine whether positioning information about a historical region is stored in the first storage area; and if the positioning information about the historical region is stored in the first storage area, the processor 701 may remove the positioning information about the historical region from the first storage area. In this way, it may be ensured that only the positioning information about the region to which the target network identifier belongs is stored in the first storage area. This may further increase a positioning speed.

Still further, if the positioning information is locally stored by the terminal, but the geographical location information corresponding to the target network identifier is not stored, the processor 701 may download, from the server, the geographical location information corresponding to the target network identifier, and load the downloaded geographical location information corresponding to the target network identifier into the positioning information. In this way, geographical location information about an added network device (the geographical location information corresponding to the target network identifier) in the region in which the terminal is currently located can be loaded into the positioning information locally stored by the terminal, and the positioning information locally stored by the terminal can be further improved.

In addition, the processor 701 may further detect that a GPS is enabled. The processor 701 may further receive, by using the input apparatus 703, geographical location information positioned by the GPS. The processor 701 may further update the geographical location information corresponding to the target network identifier in the locally stored positioning information to the geographical location information positioned by the GPS.

In summary, in implementations of the embodiments of the present invention, a terminal queries, according to a target network identifier, whether positioning information about a region to which the target network identifier belongs is stored locally, and if the positioning information about the region is not stored, downloads the positioning information about the region from a server to a local end; and when a positioning request is received, the terminal obtains, from the locally stored positioning information about the region, geographical location information corresponding to the target network identifier. The geographical location information of the terminal can be directly obtained from the local end according to the target network identifier. Therefore, dependency of terminal positioning on a network is reduced, interactions between the terminal and the server are reduced, and a positioning speed is increased effectively.

## Claims

1. A positioning method, comprising:
obtaining (S101, S201), by a terminal device, a cell identity obtained by the terminal from a base station at a current time, or a network identifier such as a basic service set identifier of a wireless network access point that is obtained by the terminal at a current time, as a target network identifier;
querying (S103), by the terminal device, according to the target network identifier, whether positioning information about a region to which the target network identifier belongs is stored locally on the terminal device, and if the positioning information about the region is not stored, downloading (S105) the positioning information about the region from a server to the terminal device, wherein the positioning information about the region comprises geographical location information corresponding to each of multiple network identifiers that the region has, and the multiple network identifiers are used to represent multiple network devices in the region; and
when a positioning request is received by the terminal device, obtaining (S107, S213), by the terminal device, from the locally stored positioning information about the region, geographical location information corresponding to the target network identifier,
**characterized in that** the querying (S103), according to the target network identifier, whether positioning information about a region to which the target network identifier belongs is stored locally, comprises:
requesting to obtain, by the terminal device, from the server, the region to which the target network identifier belongs, and then querying, according to the region returned by the server, whether the positioning information about the region is stored locally, wherein when the query result is yes, it indicates that the positioning information about the region is stored locally, whereas when the query result is no, it indicates that the positioning information about the region is not stored locally.

2. The method according to claim 1, wherein the querying, according to the region returned by the server, whether the positioning information about the region is stored locally, comprises: querying (S203) whether the positioning information is stored in a local first storage area; if the positioning information is not stored in the local first storage area, querying (S205) whether the positioning information is stored in a local second storage area; and if the positioning information is stored in the local second storage area, loading (S207) the positioning information stored in the local second storage area into the local first storage area, whereas if the positioning information is not stored in the local second storage area, performing the step of downloading (S209) the positioning information about the region from a server to a local end; and
the obtaining (S213), from the locally stored positioning information about the region, geographical location information corresponding to the target network identifier comprises: if the positioning information is stored in the local first storage area, obtaining, from the local first storage area, the geographical location information corresponding to the target network identifier, whereas if the positioning information is not stored in the local first storage area, obtaining, from the local second storage area, the geographical location information corresponding to the target network identifier.

3. The method according to claim 2, wherein the downloading (S209) the positioning information about the region from a server to a local end comprises: downloading the positioning information from the server to the local second storage area; or downloading the positioning information from the server to the local first storage area.

4. The method according to claim 2 or 3, wherein when loading (S207) the positioning information stored in the local second storage area into the local first storage area, the method further comprises: determining whether positioning information about a previously visited region is stored in the local first storage area, and if the positioning information about the previously visited region is stored, removing the positioning information about the previously visited region from the local first storage area.

5. The method according to any one of claims 1 to 4, wherein after the querying whether positioning information about a region to which the target network identifier belongs is stored locally, the method further comprises:
if the positioning information is stored locally, but the geographical location information corresponding to the target network identifier is missing in the positioning information, downloading, from the server, the geographical location information corresponding to the target network identifier, and loading the downloaded geographical location information corresponding to the target network identifier into the positioning information.

6. A positioning apparatus (40) for a terminal (70), comprising:
an obtaining unit (401), configured to obtain a cell identity obtained by the terminal from a base station at a current time, or a network identifier such as a basic service set identifier of a wireless network access point that is obtained by the terminal at a current time, as a target network identifier;
a querying unit (403), configured to query, according to the target network identifier, whether positioning information about a region to which the target network identifier belongs is stored locally, wherein the positioning information about the region is geographical location information corresponding to each of multiple network identifiers that the region has, and the multiple network identifiers are used to represent multiple network devices in the region;
a first downloading unit (405), configured to download the positioning information about the region from a server to a local end when a query result output by the querying unit (403) is no; and
a positioning unit (407), configured to obtain, from the locally stored positioning information about the region, geographical location information corresponding to the target network identifier when a positioning request is received,
**characterized in that** the querying unit (403) is specifically configured to:
request to obtain, from the server, the region to which the target network identifier belongs, and then query, according to the region returned by the server, whether the positioning information about the region is stored locally, wherein when the query result is yes, it indicates that the positioning information about the region is stored locally, whereas when the query result is no, it indicates that the positioning information about the region is not stored locally.

7. The apparatus (40) according to claim 6, wherein the querying unit (403) comprises a first querying subunit (4031), a second querying subunit (4033), a first loading unit (4035), and a download triggering unit (4037), wherein
the first querying subunit (4031) is configured to query whether the positioning information is stored in a local first storage area;
the second querying subunit (4033) is configured to query, when a query result of the first querying subunit (4031) is no, whether the positioning information is stored in a local second storage area;
the first loading unit (4035) is configured to load, when a query result of the second querying subunit (4033) is yes, the positioning information stored in the local second storage area into the local first storage area;
the download triggering unit (4037) is configured to trigger the first downloading unit (405) to download the positioning information about the region from the server to the local end when a query result of the second querying subunit is no; and
the positioning unit (407) is specifically configured to: if the positioning information is stored in the local first storage area, obtain, from the local first storage area, the geographical location information corresponding to the target network identifier, whereas if the positioning information is not stored in the local first storage area, obtain, from the local second storage area, the geographical location information corresponding to the target network identifier.

8. The apparatus (40) according to claim 7, wherein the first downloading unit (405) is specifically configured to: download the positioning information from the server to the local second storage area; or download the positioning information from the server to the local first storage area.

9. The apparatus (40) according to claim 7 or 8, further comprising a determining unit (411) and a removing unit (409), wherein
the determining unit (411) is configured to determine, when the first loading unit (4035) loads the positioning information stored in the local second storage area into the local first storage area, whether positioning information about a previously visited region is stored in the local first storage area; and
the removing unit (409) is configured to remove the positioning information about the previously visited region from the local first storage area when a result output by the determining unit (411) is yes.

10. The apparatus (40) according to any one of claims 6 to 9, further comprising a second downloading unit (413) and a second loading unit (415), wherein
the second downloading unit(413) is configured to: after the querying unit (403) queries whether the positioning information about the region to which the target network identifier belongs is stored locally, if the positioning information is stored locally, but the geographical location information corresponding to the target network identifier is missing in the positioning information, download, from the server, the geographical location information corresponding to the target network identifier; and
the second loading unit (415) is configured to load the geographical location information corresponding to the target network identifier and downloaded by the second downloading (413) unit, into the positioning information.

11. A terminal (70), comprising an input apparatus (703), an output apparatus (704), a memory (702), and a processor (701) coupled with the memory (702), wherein
the processor (701) is configured to read instructions stored in the memory (702) to perform a positioning method according to any one of claims 1 to 5.

## Patentansprüche

1. Positionierungsverfahren, das Folgendes aufweist:
Erhalten (S101, S201), durch eine Endgerätvorrichtung, einer Zellenidentität, erhalten durch das Endgerät von einer Basisstation zu einem aktuellen Zeitpunkt, oder einer Netzwerkkennung, wie etwa einer Basisdienstsatzkennung eines kabellosen Netzwerkzugangspunkts, die durch das Endgerät zu einem aktuellen Zeitpunkt erhalten wird, als eine Zielnetzwerkkennung;
Abfragen (S103), durch die Endgerätvorrichtung, entsprechend der Zielnetzwerkkennung, ob Positionierungsinformationen über eine Region, zu der die Zielnetzwerkkennung gehört, lokal auf der Endgerätvorrichtung gespeichert sind, und wenn die Positionierungsinformationen über die Region nicht gespeichert sind, Herunterladen (S105) der Positionierungsinformationen über die Region von einem Server auf die Endgerätvorrichtung, wobei die Positionierungsinformationen über die Region geografische Ortsinformationen entsprechend jeder der mehreren Netzwerkkennungen aufweisen, die die Region hat, und wobei die mehreren Netzwerkkennungen verwendet werden, um mehrere Netzwerkvorrichtungen in der Region zu repräsentieren; und
wenn eine Positionierungsanforderung durch die Endgerätvorrichtung empfangen wird, Erhalten (S107, S213), durch die Endgerätvorrichtung, aus den lokal gespeicherten Positionierungsinformationen über die Region, von geografischen Ortsinformationen entsprechend der Zielnetzwerkkennung,
**dadurch gekennzeichnet, dass** das Abfragen (S103), entsprechend der Zielnetzwerkkennung, ob Positionierungsinformationen über eine Region, zu der die Zielnetzwerkkennung gehört, lokal gespeichert ist, Folgendes aufweist:
Anfordern zum Erhalten, durch die Endgerätvorrichtung, vom Server, der Region, zu der die Zielnetzwerkkennung gehört, und dann Abfragen, entsprechend der durch den Server zurückgegebenen Region, ob die Positionierungsinformationen über die Region lokal gespeichert sind, wobei, wenn das Abfrageergebnis ja ist, dies anzeigt, dass die Positionierungsinformationen über die Region lokal gespeichert sind, wohingegen, wenn das Abfrageergebnis nein ist, dies anzeigt, dass die Positionierungsinformationen über die Region nicht lokal gespeichert sind.

2. Verfahren nach Anspruch 1, wobei das Abfragen, entsprechend der durch den Server zurückgegebenen Region, ob die Positionierungsinformationen über die Region lokal gespeichert sind, Folgendes aufweist: Abfragen (S203), ob die Positionierungsinformationen in einem lokalen ersten Speicherbereich gespeichert sind;
wenn die Positionierungsinformationen nicht in dem lokalen ersten Speicherbereich gespeichert sind, Abfragen (S205), ob die Positionierungsinformationen in einem lokalen zweiten Speicherbereich gespeichert sind, und wenn die Positionierungsinformationen in dem lokalen zweiten Speicherbereich gespeichert sind, Laden (S207) der in dem lokalen zweiten Speicherbereich gespeicherten Positionierungsinformationen in den lokalen ersten Speicherbereich, sowie andernfalls, wenn die Positionierungsinformationen nicht in dem lokalen zweiten Speicherbereich gespeichert sind, Durchführen des Schritts des Herunterladens (S209) der Positionierungsinformationen über die Region von einem Server auf ein lokales Ende; und
wobei das Erhalten (S213), aus den lokal gespeicherten Positionierungsinformationen über die Region, von geografischen Ortsinformationen entsprechend der Zielnetzwerkkennung Folgendes aufweist: wenn die Positionierungsinformationen in dem lokalen ersten Speicherbereich gespeichert sind, Erhalten, aus dem lokalen ersten Speicherbereich, der geografischen Ortsinformationen entsprechend der Zielnetzwerkkennung, sowie andernfalls, wenn die Positionierungsinformationen nicht in dem lokalen ersten Speicherbereich gespeichert sind, Erhalten, aus dem lokalen zweiten Speicherbereich, der geografischen Ortsinformationen entsprechend der Zielnetzwerkkennung.

3. Verfahren nach Anspruch 2, wobei das Herunterladen (S209) der Positionierungsinformationen über die Region von einem Server auf ein lokales Ende Folgendes aufweist: Herunterladen der Positionierungsinformationen vom Server auf den lokalen zweiten Speicherbereich; oder Herunterladen der Positionierungsinformationen vom Server auf den lokalen ersten Speicherbereich.

4. Verfahren nach Anspruch 2 oder 3, wobei beim Laden (S207) der in dem lokalen zweiten Speicherbereich gespeicherten Positionierungsinformationen in den lokalen ersten Speicherbereich das Verfahren ferner Folgendes aufweist: Bestimmen, ob Positionierungsinformationen über eine vorher besuchte Region im lokalen ersten Speicherbereich gespeichert sind, und wenn die Positionierungsinformationen über die vorher besuchte Region gespeichert sind, Entfernen der Positionierungsinformationen über die vorher besuchte Region aus dem lokalen ersten Speicherbereich.

5. Verfahren nach einem der Ansprüche 1 bis 4, wobei nach dem Abfragen, ob Positionierungsinformationen über eine Region, zu der die Zielnetzwerkkennung gehört, lokal gespeichert sind, das Verfahren ferner Folgendes aufweist:
wenn die Positionierungsinformationen lokal gespeichert sind, aber die geografischen Ortsinformationen entsprechend der Zielnetzwerkkennung in den Positionierungsinformationen fehlen, Herunterladen, vom Server, der geografischen Ortsinformationen entsprechend der Zielnetzwerkkennung, und Laden der heruntergeladenen geografischen Ortsinformationen entsprechend der Zielnetzwerkkennung in die Positionierungsinformationen.

6. Positionierungsvorrichtung (40) für ein Endgerät (70), die Folgendes aufweist:
eine Erhalteeinheit (401), ausgebildet zum Erhalten einer Zellenidentität, die durch das Endgerät von einer Basisstation zu einem aktuellen Zeitpunkt erhalten wurde, oder einer Netzwerkkennung, wie etwa einer Basisdienstsatzkennung eines kabellosen Netzwerkzugangspunkts, die durch das Endgerät zu einem aktuellen Zeitpunkt erhalten wird, als eine Zielnetzwerkkennung;
eine Abfrageeinheit (403), ausgebildet zum Abfragen, entsprechend der Zielnetzwerkkennung, ob Positionierungsinformationen über eine Region, zu der die Zielnetzwerkkennung gehört, lokal gespeichert sind, wobei die Positionierungsinformationen über die Region geografische Ortsinformationen entsprechend jeder der mehreren Netzwerkkennungen sind, die die Region hat, und die mehreren Netzwerkkennungen verwendet werden, um mehrere Netzwerkvorrichtungen in der Region zu repräsentieren;
eine erste Herunterladeeinheit (405), ausgebildet zum Herunterladen der Positionierungsinformationen über die Region von einem Server auf ein lokales Ende, wenn ein Abfrageergebnis durch die Abfrageeinheit (403) nein ist; und
eine Positionierungseinheit (407), ausgebildet zum Erhalten, aus den lokal gespeicherten Positionierungsinformationen über die Region, von geografischen Ortsinformationen entsprechend der Zielnetzwerkkennung, wenn eine Positionierungsanforderung empfangen wird,
**dadurch gekennzeichnet, dass** die Abfrageeinheit (403) speziell ausgebildet ist zum:
Anfordern des Erhaltens, vom Server, der Region, zu der die Zielnetzwerkkennung gehört, und dann Abfragen, entsprechend der durch den Server zurückgegebenen Region, ob die Positionierungsinformationen über die Region lokal gespeichert sind, wobei, wenn das Abfrageergebnis ja ist, dies anzeigt, dass die Positionierungsinformationen über die Region lokal gespeichert sind, wohingegen, wenn das Abfrageergebnis nein ist, dies anzeigt, dass die Positionierungsinformationen über die Region nicht lokal gespeichert sind.

7. Vorrichtung (40) nach Anspruch 6, wobei die Abfrageeinheit (403) eine erste Abfrageuntereinheit (4031), eine zweite Abfrageuntereinheit (4033), eine erste Ladeeinheit (4035) und eine Herunterladeauslöseeinheit (4037) aufweist, wobei die erste Abfrageuntereinheit (4031) ausgebildet ist zum Abfragen, ob die Positionierungsinformationen in einem lokalen ersten Speicherbereich gespeichert sind; die zweite Abfrageuntereinheit (4033) ausgebildet ist zum Abfragen, wenn ein Abfrageergebnis der ersten Abfrageuntereinheit (4031) nein ist, ob die Positionierungsinformationen in einem lokalen zweiten Speicherbereich gespeichert sind;
die erste Ladeeinheit (4035) ausgebildet ist zum Laden, wenn ein Abfrageergebnis der zweiten Abfrageuntereinheit (4033) ja ist, der in dem lokalen zweiten Speicherbereich gespeicherten Positionierungsinformationen in den lokalen ersten Speicherbereich; die Herunterladeauslöseeinheit (4037) ausgebildet ist zum Auslösen der ersten Herunterladeeinheit (405) zum Herunterladen der Positionierungsinformationen über die Region vom Server auf das lokale Ende, wenn ein Abfrageergebnis der zweiten Abfrageuntereinheit nein ist; und
die Positionierungseinheit (407) speziell ausgebildet ist zum: wenn die Positionierungsinformationen in dem lokalen ersten Speicherbereich gespeichert sind, Erhalten, aus dem lokalen ersten Speicherbereich, der geografischen Ortsinformationen entsprechend der Zielnetzwerkkennung, sowie andernfalls, wenn die Positionierungsinformationen nicht in dem lokalen ersten Speicherbereich gespeichert sind, Erhalten, aus dem lokalen zweiten Speicherbereich, der geografischen Ortsinformationen entsprechend der Zielnetzwerkkennung.

8. Vorrichtung (40) nach Anspruch 7, wobei die erste Herunterladeeinheit (405) speziell ausgebildet ist zum: Herunterladen der Positionierungsinformationen vom Server auf den lokalen zweiten Speicherbereich; oder Herunterladen der Positionierungsinformationen vom Server auf den lokalen ersten Speicherbereich.

9. Vorrichtung (40) nach Anspruch 7 oder 8, ferner eine Bestimmungseinheit (411) und eine Entfernungseinheit (409) aufweisend, wobei
die Bestimmungseinheit (411) ausgebildet ist zum Bestimmen, wenn die erste Ladeeinheit (4035) die in dem lokalen zweiten Speicherbereich gespeicherten Positionierungsinformationen in den lokalen ersten Speicherbereich lädt, ob Positionierungsinformationen über eine vorher besuchte Region im lokalen ersten Speicherbereich gespeichert sind; und
die Entfernungseinheit (409) ausgebildet ist zum Entfernen der Positionierungsinformationen über die vorher besuchte Region aus dem lokalen ersten Speicherbereich, wenn ein durch die Bestimmungseinheit (411) ausgegebenes Ergebnis ja ist.

10. Vorrichtung (40) nach einem der Ansprüche 6 bis 9, ferner umfassend eine zweite Herunterladeeinheit (413) und eine zweite Ladeeinheit (415), wobei
die zweite Herunterladeeinheit (413) ausgebildet ist zum: nachdem die Abfrageeinheit (403) abfragt, ob die Positionierungsinformationen über die Region, zu der die Zielnetzwerkkennung gehört, lokal gespeichert sind, wenn die Positionierungsinformationen lokal gespeichert sind, aber die geografischen Ortsinformationen entsprechend der Zielnetzwerkkennung in den Positionierungsinformationen fehlen, Herunterladen, vom Server, der geografischen Ortsinformationen entsprechend der Zielnetzwerkkennung; und
die zweite Ladeeinheit (415) ausgebildet ist zum Laden der geografischen Ortsinformationen, entsprechend der Zielnetzwerkkennung und heruntergeladen durch die zweite Herunterladeeinheit (413), in die Positionierungsinformationen.

11. Endgerät (70), umfassend eine Eingabevorrichtung (703), eine Ausgabevorrichtung (704), einen Speicher (702) und einen Prozessor (701), gekoppelt mit dem Speicher (702), wobei der Prozessor (701) ausgebildet ist zum Lesen von im Speicher (702) gespeicherten Anweisungen zum Durchführen eines Positionierungsverfahrens nach einem der Ansprüche 1 bis 5.

## Revendications

1. Procédé de positionnement, comprenant :
l'obtention (S101, S201), par un dispositif de terminal, d'une identité de cellule obtenue par le terminal à partir d'une station de base à une heure actuelle, ou d'un identifiant de réseau tel qu'un identifiant de réseau sans fil de base d'un point d'accès de réseau sans fil qui est obtenu par le terminal à une heure actuelle, en tant qu'identifiant de réseau cible ;
l'interrogation (S103), par le dispositif de terminal, selon l'identifiant de réseau cible, en ce qui concerne le fait que des informations de positionnement concernant une région à laquelle l'identifiant de réseau cible appartient sont, ou ne sont pas, stockées localement sur le dispositif de terminal, et, si les informations de positionnement concernant la région ne sont pas stockées, le téléchargement (S 105) des informations de positionnement concernant la région, à partir d'un serveur, sur le dispositif de terminal, dans lequel les informations de positionnement concernant la région comprennent des informations de localisation géographique correspondant à chacun de multiples identifiants de réseau que la région a, et les multiples identifiants de réseau sont utilisés pour représenter de multiples dispositifs de réseau dans la région ; et
lorsqu'une demande de positionnement est reçue par le dispositif de terminal, l'obtention (S107, S213), par le dispositif de terminal, à partir des informations de positionnement stockées localement concernant la région, d'informations de localisation géographique correspondant à l'identifiant de réseau cible, **caractérisé en ce que** l'interrogation (S103), selon l'identifiant de réseau cible, en ce qui concerne le fait que des informations de positionnement concernant une région à laquelle l'identifiant de réseau cible appartient sont, ou ne sont pas, stockées localement, comprend :
la demande d'obtenir, par le dispositif de terminal, à partir du serveur, la région à laquelle l'identifiant de réseau cible appartient, et puis l'interrogation, selon la région communiquée par le serveur, en ce qui concerne le fait que les informations de positionnement concernant la région sont, ou ne sont pas, stockées localement, dans lequel, lorsque le résultat d'interrogation est oui, ceci indique que les informations de positionnement concernant la région sont stockées localement, alors que, lorsque le résultat d'interrogation est non, ceci indique que les informations de positionnement concernant la région ne sont pas stockées localement.

2. Procédé selon la revendication 1, dans lequel l'interrogation, selon la région communiquée par le serveur, en ce qui concerne le fait que les informations de positionnement concernant la région sont, ou ne sont pas, stockées localement, comprend : l'interrogation (S203) en ce qui concerne le fait que les informations de positionnement sont, ou ne sont pas, stockées dans une première zone de stockage locale ; si les informations de positionnement ne sont pas stockées dans la première zone de stockage locale, l'interrogation (S205) en ce qui concerne le fait que les informations de positionnement sont, ou ne sont pas, stockées dans une seconde zone de stockage locale ; et, si les informations de positionnement sont stockées dans la seconde zone de stockage locale, le chargement (S207) des informations de positionnement stockées dans la seconde zone de stockage locale dans la première zone de stockage locale, alors que, si les informations de positionnement ne sont pas stockées dans la seconde zone de stockage locale, la réalisation de l'étape du téléchargement (S209) des informations de positionnement concernant la région, à partir d'un serveur, sur une extrémité locale ; et l'obtention (S213), à partir des informations de positionnement stockées localement concernant la région, d'informations de localisation géographique correspondant à l'identifiant de réseau cible comprend : si les informations de positionnement sont stockées dans la première zone de stockage locale, l'obtention, à partir de la première zone de stockage locale, des informations de localisation géographique correspondant à l'identifiant de réseau cible, alors que, si les informations de positionnement ne sont pas stockées dans la première zone de stockage locale, l'obtention, à partir de la seconde zone de stockage locale, des informations de localisation géographique correspondant à l'identifiant de réseau cible.

3. Procédé selon la revendication 2, dans lequel le téléchargement (S209) des informations de positionnement concernant la région, à partir d'un serveur, sur une extrémité locale comprend : le téléchargement des informations de positionnement, à partir du serveur, sur la seconde zone de stockage locale ; ou le téléchargement des informations de positionnement, à partir du serveur, sur la première zone de stockage locale.

4. Procédé selon la revendication 2 ou 3, dans lequel, lors du chargement (S207) des informations de positionnement stockées dans la seconde zone de stockage locale dans la première zone de stockage locale, le procédé comprend en outre : la détermination du fait que des informations de positionnement concernant une région visitée auparavant sont, ou ne sont pas, stockées dans la première zone de stockage locale, et, si les informations de positionnement concernant la région visitée auparavant sont stockées, l'enlèvement des informations de positionnement concernant la région visitée auparavant à partir de la première zone de stockage locale.

5. Procédé selon l'une quelconque des revendications 1 à 4, dans lequel, après l'interrogation en ce qui concerne le fait que des informations de positionnement concernant une région à laquelle l'identifiant de réseau cible appartient sont, ou ne sont pas, stockées localement, le procédé comprend en outre :
si les informations de positionnement sont stockées localement, mais les informations de localisation géographique correspondant à l'identifiant de réseau cible sont manquantes dans les informations de positionnement, le téléchargement, à partir du serveur, des informations de localisation géographique correspondant à l'identifiant de réseau cible, et le chargement des informations de localisation géographique téléchargées correspondant à l'identifiant de réseau cible dans les informations de positionnement.

6. Appareil de positionnement (40) pour un terminal (70), comprenant :
une unité d'obtention (401), configurée pour obtenir une identité de cellule obtenue par le terminal à partir d'une station de base à une heure actuelle, ou un identifiant de réseau tel qu'un identifiant de réseau sans fil de base d'un point d'accès de réseau sans fil qui est obtenu par le terminal à une heure actuelle, en tant qu'identifiant de réseau cible ;
une unité d'interrogation (403), configurée pour interroger, selon l'identifiant de réseau cible, en ce qui concerne le fait que des informations de positionnement concernant une région à laquelle l'identifiant de réseau cible appartient sont, ou ne sont pas, stockées localement, dans lequel les informations de positionnement concernant la région sont des informations de localisation géographique correspondant à chacun de multiples identifiants de réseau que la région a, et les multiples identifiants de réseau sont utilisés pour représenter de multiples dispositifs de réseau dans la région ;
une première unité de téléchargement (405), configurée pour télécharger les informations de positionnement concernant la région à partir d'un serveur sur une extrémité locale lorsqu'un résultat d'interrogation produit en sortie par l'unité d'interrogation (403) est non ; et
une unité de positionnement (407), configurée pour obtenir, à partir des informations de positionnement stockées localement concernant la région, des informations de localisation géographique correspondant à l'identifiant de réseau cible lorsqu'une demande de positionnement est reçue,
**caractérisé en ce que** l'unité d'interrogation (403) est spécifiquement configurée pour :
demander d'obtenir, à partir du serveur, la région à laquelle l'identifiant de réseau cible appartient, et puis interroger, selon la région communiquée par le serveur, en ce qui concerne le fait que les informations de positionnement concernant la région sont, ou ne sont pas, stockées localement, dans lequel, lorsque le résultat d'interrogation est oui, ceci indique que les informations de positionnement concernant la région sont stockées localement, alors que, lorsque le résultat d'interrogation est non, ceci indique que les informations de positionnement concernant la région ne sont pas stockées localement.

7. Appareil (40) selon la revendication 6, dans lequel l'unité d'interrogation (403) comprend une première sous-unité d'interrogation (4031), une seconde sous-unité d'interrogation (4033), une première unité de chargement (4035), et une unité de déclenchement de téléchargement (4037), dans lequel
la première sous-unité d'interrogation (4031) est configurée pour interroger en ce qui concerne le fait que les informations de positionnement sont, ou ne sont pas, stockées dans une première zone de stockage locale ;
la seconde sous-unité d'interrogation (4033) est configurée pour interroger, lorsqu'un résultat d'interrogation de la première sous-unité d'interrogation (4031) est non, en ce qui concerne le fait que les informations de positionnement sont, ou ne sont pas, stockées dans une seconde zone de stockage locale ;
la première unité de chargement (4035) est configurée pour charger, lorsqu'un résultat d'interrogation de la seconde sous-unité d'interrogation (4033) est oui, les informations de positionnement stockées dans la seconde zone de stockage locale dans la première zone de stockage locale ;
l'unité de déclenchement de téléchargement (4037) est configurée pour déclencher la première unité de téléchargement (405) pour télécharger les informations de positionnement concernant la région, à partir du serveur, sur l'extrémité locale, lorsqu'un résultat d'interrogation de la seconde sous-unité d'interrogation est non ; et
l'unité de positionnement (407) est spécifiquement configurée pour : si les informations de positionnement sont stockées dans la première zone de stockage locale, obtenir, à partir de la première zone de stockage locale, les informations de localisation géographique correspondant à l'identifiant de réseau cible, alors que, si les informations de positionnement ne sont pas stockées dans la première zone de stockage locale, obtenir, à partir de la seconde zone de stockage locale, les informations de localisation géographique correspondant à l'identifiant de réseau cible.

8. Appareil (40) selon la revendication 7, dans lequel la première unité de téléchargement (405) est spécifiquement configurée pour : télécharger les informations de positionnement, à partir du serveur, sur la seconde zone de stockage locale ; ou télécharger les informations de positionnement, à partir du serveur, sur la première zone de stockage locale.

9. Appareil (40) selon la revendication 7 ou 8, comprenant en outre une unité de détermination (411) et une unité d'enlèvement (409), dans lequel
l'unité de détermination (411) est configurée pour déterminer, lorsque la première unité de chargement (4035) charge les informations de positionnement stockées dans la seconde zone de stockage locale dans la première zone de stockage locale, le fait que des informations de positionnement concernant une région visitée auparavant sont, ou ne sont pas, stockées dans la première zone de stockage locale ; et
l'unité d'enlèvement (409) est configurée pour enlever les informations de positionnement concernant la région visitée auparavant à partir de la première zone de stockage locale lorsqu'un résultat produit en sortie par l'unité de détermination (411) est oui.

10. Appareil (40) selon l'une quelconque des revendications 6 à 9, comprenant en outre une seconde unité de téléchargement (413) et une seconde unité de chargement (415), dans lequel
la seconde unité de téléchargement (413) est configurée pour : après que l'unité d'interrogation (403) interroge en ce qui concerne le fait que les informations de positionnement concernant la région à laquelle l'identifiant de réseau cible appartient sont, ou ne sont pas, stockées localement, si les informations de positionnement sont, ou ne sont pas, stockées localement, mais les informations de localisation géographique correspondant à l'identifiant de réseau cible sont manquantes dans les informations de positionnement, télécharger, à partir du serveur, les informations de localisation géographique correspondant à l'identifiant de réseau cible ; et
la seconde unité de chargement (415) est configurée pour charger les informations de localisation géographique correspondant à l'identifiant de réseau cible et téléchargées par la seconde unité de téléchargement (413), dans les informations de positionnement.

11. Terminal (70), comprenant un appareil d'entrée (703), un appareil de sortie (704), une mémoire (702), et un processeur (701) couplé à la mémoire (702), dans lequel
le processeur (701) est configuré pour lire des instructions stockées dans la mémoire (702) pour réaliser un procédé de positionnement selon l'une quelconque des revendications 1 à 5.
